Europäisches Patentamt

(19) European Patent Office (11) Publication number: **0 009 250**

Office européen des brevets **B1**

(12) **EUROPEAN PATENT SPECIFICATION**

(45) Date of publication of patent specification: 22.12.82 (51) Int. Cl.³: **C 08 J 3/16, C 08 C 1/14**

(21) Application number: **79103550.4**

(22) Date of filing: **20.09.79**

(54) **Free-flowing composite particles and method for preparing them.**

(30) Priority: **22.09.78 US 944681**

(43) Date of publication of application:
**02.04.80 Bulletin 80/7**

(45) Publication of the grant of the patent:
**22.12.82 Bulletin 82/51**

(84) Designated Contracting States:
**BE DE FR GB IT LU NL**

(56) References cited:
**FR - A - 2 179 054**
**US - A - 3 218 278**

(73) Proprietor: **POLYSAR INTERNATIONAL S.A.**
**P.O. Box 1063 Route de Beaumont 10**
**CH-1071 Fribourg (CH)**

(72) Inventor: **Chang, Daniel Ming**
**111 Highland Avenue**
**Avon Lake Ohio 44012 (US)**

(74) Representative: **von Kreisler, Alek, Dipl.-Chem.
et al,**
**Deichmannhaus am Hauptbahnhof**
**D-5000 Köln 1 (DE)**

Courier Press, Leamington Spa, England.

# Free-flowing composite particles and method for preparing them

## Field of the invention

This invention relates to a method and to compositions prepared according to this method. More specifically, this invention concerns itself with the preparation of free-flowing composite particles comprising predominantly elastomeric materials. The free-flowing elastomeric materials prepared in the above manner can be dry-blended with fillers and/or pigments preliminary to forming into usual shapes and articles.

## Description of the prior art

The use of flow control agents in the processing and dispensing of materials is a common and widely accepted practice throughout industry. The manner in which such agents function is open to various interpretations. Depending upon the material which is employed, such flow control agents can physically separate larger particles thereby preventing their agglomeration or alter the surface free energy of the treated material and thereby reduce its tendency to agglomerate. Irrespective of the mechanism by which such materials operate, the fundamental purpose is the same, namely prevention of particle growth and maintenance of a free-flowing particle mass.

The problem of particle agglomeration is especially acute in elastomers. Elastomer particles, "powdered rubber", are quite prone to agglomeration during storage even where such material is treated with flow control agents, such as talc. The Goodyear Tire and Rubber Company has recently introduced a powdered rubber product which is believed to comprise a polyvinyl chloride resin encapsulated elastomer particle. It is believed that fine particles of polyvinyl chloride are also present in the product as flow control agents. The manner and preparation of this product is not evident by simple inspection of the product itself.

Where one attempts to modify the elastomer particle such as by encapsulation, care must be taken so as not to adversely alter the processing characteristics of the elastomer or otherwise substantially modify its intrinsic properties. Thus, it will be appreciated that the material which is associated with the elastomer must be otherwise compatible with the end use characteristics of the elastomer and must be effective at extremely low concentrations to minimize the possibility of adverse impact.

FR—A 2 179 054 relates to the preparation of polymer particles having improved flow characteristics. According to example 1 a latex of a resin e.g. polyvinyl chloride is added to a dispersion of an elastomer formed by adding a coagulant to a latex of the elastomer. Neither one of the two components is pre-treated with a solvent causing swelling of the elastomer and non-elastomer respectively.

US—A 3 218 278 discloses a process for dispersing polymers in organic liquids which are non-solvents for the polymers. It is stated in column 2, lines 21—27 that polymer cohesive forces are reduced by controlled swelling of the polymer particles in aqueous suspension by adding a material which produces controlled swelling of the polymer particles. The coagulants obtained after coagulation are characterized by greatly reduced forces of cohesion within the solid mass of particles. Furthermore, the coagulum can readily be redispersed in an organic fluid which is a nonsolvent for the polymer. No one skilled in the art could conclude, that the swelling of particles preliminary to their coagulation would cause the particles to adhere to other particles which may also be present within the dispersion.

Accordingly, it is the object of this invention to remedy the above as well as related deficiencies in the prior art, more specifically to provide a method for preparation of a free-flowing powdered rubber and especially to provide a method for the preparation of a powdered rubber which comprises a mixture containing composite particles composed predominantly of elastomeric materials and minor quantities of substantially nonelastomeric materials.

The above and related object are achieved by providing a method for forming free flowing, dry elastomer powder which does not agglomerate upon storage, wherein a fluid dispersion of elastomer powder and a latex of nonelastomeric polymer are contacted with one another and the latex thereafter coagulated, whereby at least some of the nonelastomeric polymer is deposited upon the elastomer powder and the solid content is then separated and dried, characterized in that to the latex, prior to its contact with the dispersion elastomer powder, 50—150 parts by weight of solvent per 100 parts by weight of nonelastomeric powder are added, said solvent being practically immiscible with the fluid phase of both the latex and the elastomer powder dispersion and being capable of swelling the nonelastomeric polymer and the elastomer powder.

As mentioned, according to the invention a dispersion of elastomeric particles is combined with a latex of nonelastomeric particles. Preliminary to such combination, the nonelastomeric particles are contacted with a solvent so as to result in swelling thereof. Upon the intermixing of the dispersion and the latex, the nonelastomeric particles become intimately associated with the elastomeric particles. The combined system is thereupon coagulated with conventional coagulants resulting in the deposition of at least some of the nonelastomeric particles on the elastomer. Subsequent to separation and drying, the recovered solids are evaluated for morphology and composition. It would appear that the recovered solids comprises a mixture of (i) composite particles wherein the elastomeric material is associated with the nonelastomeric material, (ii) particles of elastomeric materials substantially devoid of nonelastomeric material and (iii) fine particles of nonelastomeric materials. The fine particles of nonelastomeric material of the mixture are smaller than either of the composite particle or the particles of elastomer, and are thus believed to function in a manner similar to flow control agents. It would also appear that, in the composite particles, the nonelastomeric material has substantially encapsulated the elastomer particles. The relative concentration of nonelastomeric material to elastomeric material in such composite particles can vary within certain limits and preferably should be from 0.5 to 8 weight percent.

Description of the invention including preferred embodiments

The elastomers to which this invention is particularly applicable are the vinyl acetate/ethylene copolymers containing from 45 to 95 weight percent vinyl acetate, polybutadienes, copolymers of butadiene with one or more monomers, such as styrene, acrylonitrile, and methylmethacrylate, and polymers of substituted butadienes such as isoprene, for example, polyisoprene, and chlorobutadiene, for example, neoprene®. Most, if not all, of the above elastomers are available in the form of aqueous latices and are readily recoverable as a crumb by standard coagulation procedures. Alternatively, the above elastomers are also available in bulk and can be made suitable for use in the method of this invention by simply grinding such materials into fine powders and dispersal thereof in a suitable fluid, such as water. The particle size of the crumbs and ground powder elastomers is not critical and will generally be about 1 mm or less.

The nonelastomeric polymers suitable for use in the method of this invention are prepared in the form of a latex. Such polymers are ordinarily characterized as relatively "hard" in comparison to the elastomeric materials with which they are to be associated. Particularly preferred nonelastomeric materials which are suitable for use in the method of this invention include polyvinyl choride, polystyrene, styrene, acrylonitrile copolymers, and methylmethacrylate. As indicated above, these nonelastomeric materials are initially prepared in the form of a latex. This can be achieved by emulsion polymerization of the corresponding monomers from which they are derived. As is traditionally the case, the polymerization medium used in emulsion polymerization is water. The fluid used in such emulsion polymerization and the fluid used in the dispersal of the elastomeric materials should generally be the same or readily miscible within one another.

Subsequent to preparation of the latex of the nonelastomeric polymer, the polymer particles of the latex are softened and/or swollen by the addition thereto of a solvent. The solvent should be immiscible with the fluid component of the latex. Solvent selection is also based upon its solubility parameter relative to the polymer of the latex and the elastomer. In the preferred embodiments of this invention, such solvents exhibit a high solubility parameter for both such materials. The amount of solvent introduced into the latex should be in the range of from 50 to 150, and most preferably 100 parts by weight per 100 parts by weight of nonelastomeric powder.

Of course, the particular solvent suitable for use in the method of this invention will depend upon a specific combination of elastomer and nonelastomeric materials selected for use in this method. Among the solvents which have been found acceptable include methylene chloride, chloroform, 1,2-dichloroethane, chlorobenzene, and chloroethane.

Subsequent to combination of the latex and the elastomer dispersion the former is coagulated, thereby resulting in deposition of at least some of the non-elastomeric material on the elastomer particles. The extent of such deposition can vary and preferably will result in substantial encapsulation of the elastomer particles. In addition to such encapsulation, the coagulation of the latex results in the formation of fine particles of nonelastomeric material. Subsequent to such coagulation, the solvent is stripped from the particulate material. The solids thus produced are separated from the liquid phase by standard procedures (e.g. filtration) and dried. As indicated previously, the solid mass which is recovered is a mixture of particles; some of which being substantially elastomeric and others being substantially nonelastomeric. The nonelastomeric particles are smaller in size than the predominantly elastomeric particles and these smaller particles are believed to function in a fashion similar to the more traditional types of anti-caking agents.

As indicated previously herein, the principal object of the method of this invention is to sufficiently modify the elastomeric particles so as to prevent their agglomeration and/or compaction upon storage. The amount of nonelastomeric materials relative to the elastomer particles is thus based upon obtainment of this objective. It has been found that the amount of nonelastomeric material which associates itself with elastomeric material upon coagulation of the latex is relatively concentration independent. That is, above a certain relative concentration, the amount of nonelastomeric material depositing upon the elastomeric particles appears substantially the same. Similarly, the volume of liquid present in the system does not appear to affect the overall efficiency of the method, that is, it does not apparently have any effect upon the amount of the nonelastomeric material which becomes associated with the elastomer particles. Microscopic examination of the product prepared in accord with the method of this invention reveals the significant differences in the physical surface characteristics of the product when compared with the elastomer particles used in its preparation. Apparently, the deposition and/or encapsulation of the elastomer with the nonelastomeric material substantially increases the specific surface area of the elastomer particle thereby improving its ease of dry blending with other common compounding agents (e.g. fillers, pigments). Significant differences in surface area are also evident depending upon the method of preparation of the elastomer particle. For example, where the elastomer particles are prepared by coagulation, the powder rubber "crumb" has a substantially rougher surface than elastomer particles which are prepared by physically grinding and/or pulverizing.

The only other variables which may be of significance in implementing the method of this invention relate to the temperature prevailing during such method. In order to ensure that the solvent is not inadvertently extracted from the nonelastomeric material prior to coagulation, the temperature of the system must be maintained below the boiling point thereof. In addition, where a coagulated elastomer is used in such method, the coagulated powder rubber crumb should be washed with warm water (approximately in excess of 50°C) in order to reshape the "chips" on the surface of the rubber crumb prior to encapsulation with a nonelastomeric material. Failure to take this precautionary step prior to encapsulation can result, under certain conditions, in the compaction and/or agglomeration of the elastomer upon storage. It is also advisable to allow adequate contact time between the dispersion of elastomer and the nonelastomeric latex to ensure sufficient "wetting" of the elastomer by the nonelastomeric particles. Generally, adequate "wetting" is achieved within from two to five minutes subsequent to contact of these two materials.

The Examples

The Examples which follow, further define, describe and illustrate the method and composition of the invention. The apparatus and techniques used in the practice of this method and the evaluation of the product produced thereby are standard or as hereinbefore described. Parts and percentages appearing in such Examples are by weight unless otherwise stipulated.

Example I

An acrylonitrile/butadiene copolymer (HYCAR® 1052, available from the B. F. Goodrich Company) was first ground through a 0.64 cm screen with a micropulverizer. The ground rubber was then mixed with water and stored under agitation as a 25% solids slurry. In a separate vessel, methylene chloride was poured slowly into a vinylchloride polymer latex (GEON® 151,—50% solids, surface tension 42 dynes/cm—available from the B. F. Goodrich Company) and stirred for approximately five minutes. This solvent modified Geon® latex mixture was then poured with agitation into the powdered rubber slurry. After an appropriate interval approximately 1,000 gms of a 10% calcium chloride solution was gradually added through a separating funnel to effect coagulation of the solvent modified Geon® latex. This metered addition of the coagulant took approximately 15 minutes. During such addition, the mixture was stirred with moderate agitation to effect coagulation of the powdered rubber. Subsequent to coagulation, the stirring of the mixture continues.

The temperature of the mixture was then raised to about 65°C to effect liberation of the solvent from the solvent modified Geon® latex. This stripping step took approximately 15 to 30 minutes. The interval between coagulation and stripping of the solvent is referred to as the "film forming time" and the effects of variation thereof are illustrated in Table III. Thereafter, the slurry is cooled to room temperature, the solids are separated from the fluid faction by filtration through a cheese cloth, rinsed with water and dried at 60°C in a hot air oven. Subsequent to drying, the physical properties of the solids were evaluated. The product is a free-flowing powder. Upon storage of the solids, the fine Geon® particles, which are unassociated with the elastomer, settle out and are separated from the composite particles.

Example II

The procedures of Example I are repeated except that the source of a elastomer is a HYCAR® latex (HYCAR® 1092C50, available from The B. F. Goodrich Company).

One thousand grams of saturated sodium chloride solution was added to the latex at 75°C to flocculate the latex. The solution was stirred for an additional 10 minutes to complete the flocculation process. The flocculated latex was thereupon coagulated at 75°C over a period of 20 minutes with zinc sulfate and magnesium sulfate dissolved in three gallons of water. The rubber crumbs thus produced was separated from the fluid fraction by filtration, washed for 20 minutes with hot water (75°C) thereby reshaping the chips on the surface thereof. Subsequent to washing, the crumb is cooled to room temperature by washing in cold water, (approximately 20°C) and the encapsulation process repeated substantially as described in Example I.

Evaluation procedure

Each of the products prepared in the manner of Examples I and II were evaluated in the following fashion. A friability test was performed for the encapsulated rubber powder by compaction in a stainless steel cylinder (inside diameter 10.3 cm) fitted with a free moving piston. The powder was packed in the cylinder by gravity, the piston inserted and a weight of 3 psi applied to the piston. The piston position was measured from time to time and the bulk vs density time curve plotted. At the end of the compaction text, the resultant cake was taken out of the cylinder and the friability thereof determined. "Hand friable" materials indicate that the cake could be broken down to a powder by simply hand crushing and "Henschel friable" materials means that the cake could be broken down by mixing in a Henschel mixer for approximately one minute. The friability of the samples was quantified by screen analysis before and after compaction testing. The tables which follow illustrate the results of such testing for samples prepared according to the precedures of Examples I and II.

## TABLE I
### Effect of solvent level on the encapsulation[a]

| Experiment number | Methylene chloride (php)* | Coagulation temperature (°C) | Encapsulating PVC[b] (%) | Powder rubber size[c] (mm) | Comments |
|---|---|---|---|---|---|
| 213-19-8-2 | 50 | 24 | 1.5 | .72 | Free flowing powder |
| 213-19-8-4 | 100 | 22 | 1.9 | .73 | Free flowing powder |
| 213-19-8-5 | 120 | 28 | .71 | .86 | Some agglomeration on standing was observed |
| 213-19-8-1 | 150 | 24 | 1.5 | .72 | Solvent-PVC latex mix was very viscous. Free flowing powder |

[a] PVC (from Geon® 151 latex) 6 phr** was used to coat the powder rubber and film forming time was 10 minutes.
[b] % PVC in final encapsulated powder was determined by chlorine analysis.
[c] Average powder size is defined as the size at which 50% weight of powder is smaller than.
 * php=parts by weight per one hundred parts plastic (nonelastomeric material)
** phr=part by weight per one hundred parts resin

## TABLE II
### Effect of the PVC latex level on the encapsulation[a]

| Experiment number | PVC Level (phr)* | Coagulation temperature (°C) | Encapsulating PVC[b] (%) | Powdered Rubber Size[c] (mm) | Free flowing powder (?) |
|---|---|---|---|---|---|
| 213-19-8-10 | 4 | 24 | 1.1 | .72 | Yes |
| 213-19-8-4 | 6 | 22 | 1.9 | .73 | Yes |
| 213-19-8-12 | 8 | 24 | 1.2 | .78 | Yes |
| 213-19-8-13 | 10 | 23 | 1.7 | .72 | Yes |

[a] Solvent (methylene chloride) level was kept at 100 php and film forming time was 10 minutes.
[b] % PVC in final encapsulated powder was determined by chloride analysis.
[c] Average powder size is defined as the size at which 50% weight of powder is smaller than.
 * phr=parts by weight per one hundred parts rubber (elastomeric material)

## TABLE III
### Encapsulation of coagulated powder rubber[a]

| Experiment number | PVC Level (phr)[d] | Coagulation temperature (°C) | Film forming time (min)[c] | Encapsulated PVC[b] (%) | Powder rubber size (mm) | Portion of total PVC as fine powder |
|---|---|---|---|---|---|---|
| 213-19-15-1R | 6 | 18 | 20 | 4.5 | 1.2 | None |
| 213-19-15-5 | 6 | 16 | 60 | 4.8 | 1.1 | None |
| 213-19-15-3R | 6.5 | 20 | 20 | 3.1 | 1.5 | One-half |
| 213-19-15-4 | 6.5 | 18 | 60 | 5.1 | 1.5 | One-quarter |
| 213-19-15-3 | 8 | 18 | 10 | 2.2 | 1.4 | Two-thirds |
| 213-19-15-2R | 10 | 15 | 20 | 3.4 | 1.2 | Two-thirds |
| 213-19-15-6 | 10 | 16 | 60 | 4.5 | 1.3 | One-third |

[a] One thousand grams of powder rubber was suspended in 10,000g cool water and methylene chloride was used to modify PVC latex Geon® 151 at 100 php level.

[b] % PVC in final encapsulated powder, determined by chlorine analysis.

[c] Time between adding all calcium chloride solution and start of stripping methylene chloride.

[d] phr=parts by weight per one hundred parts rubber (elastomeric material).

Table I clearly demonstrates the effects that variations in solvent levels can have on the ultimate product. A solvent level of 100 php seems to provide the optimum both with respect to the extent of encapsulation and product properties.

In Table II, a series of samples were prepared wherein the level of polyvinyl chloride in the latex was varied. It would appear that increasing such level above 6 phr is counterproductive with respect to achieving additional encapsulation of the elastomer powder. Table II clearly indicates that where such level of polyvinyl chloride in a latex is increased beyond approximately 6 phr, the excess amount of polyvinyl chloride coagulates as a fine powder which is not in any way associated with the encapsulated elastomer. Table III demonstrates the effect that variation in film forming time, has on the extent of deposition. As is shown by the data, the degree of encapsulation of the elastomer powder is increased somewhat as the duration of contact, prior to coagulation, is extended. Thus, it would appear that the efficiency of the encapsulation is somewhat time dependent.

The effect of polyvinyl chloride on the physical properties of the encapsulated and dusted elastomer powders was evaluated and it appeared that levels of polyvinyl chloride up to about 2% do not significantly effect the viscosity of the elastomer. At levels of polyvinyl chloride of between 3.5 to about 7% the Mooney viscosity of the elastomer showed some increase however, within the anticipated range. All of the changes in physical properties effected by association of the polyvinyl chloride with the elastomer were relatively insignificant and such changes could be readily compensated for by adjusting the recipe and/or the processing procedures of the resultant product.

## Claims

1. A method for forming free flowing, dry elastomer powder which does not agglomerate upon storage, wherein a fluid dispersion of elastomer powder and a latex of nonelastomeric polymer are contacted with one another and the latex thereafter coagulated, whereby at least some of the nonelastomeric polymer is deposited upon the elastomer powder and the solid content is then separated and dried, characterized in that to the latex, prior to its contact with the dispersion elastomer powder, 50—150 parts by weight of solvent per 100 parts by weight of nonelastomeric powder are added, said solvent being practically immiscible with the fluid phase of both the latex and the elastomer powder dispersion and being capable of swelling the nonelastomeric polymer and the elastomer powder.

2. The method of claim 1 wherein the powdered elastomer is an acrylonitrile/butadiene copolymer.

3. The method of claim 1 wherein the nonelastomeric polymer is polyvinyl chloride.

4. The method of claim 1 wherein the solvent is methylene chloride.

## Patentansprüche

1. Verfahren zur Bildung eines frei fließenden trockenen Elastomeren-Pulvers, das bei der Aufbewahrung nicht agglomeriert, bei welchem eine fließfähige Dispersion eines Elastomeren-Pulvers und ein Latex eines nicht-elastomeren Polymerisats miteinander in Berührung gebracht werde und das Latex danach koaguliert wird, wodurch mindestens etwas von dem nicht-elastomeren Polymerisat auf dem Elastomeren-Pulver abgelagert wird, und der Feststoff-Anteil danach abgetrennt und getrocknt wird, dadurch gekennzeichnet, daß dem Latex, bevor dieses mit der Dispersion des Elastomeren-Pulvers in Berührung gebracht wird, 50 bis 150 Gew.-Teile Lösungsmittel auf 100 Gew.-Teile des nicht-elastomeren Pulvers zugesetzt werden, wobei dieses Lösungsmittel mit der fließfähigen Phase sowohl des Latex als auch der Dispersion des Elastomeren-Pulvers praktisch nich mischbar ist und befähigt ist, das nicht-elastomere Polymerisat und das Elastomeren-Pulver quellen zu lassen.

2. Verfahren nach Anspruch 1, dadurch gekennzeichnet, daß das gepulverte Elastomer ein Acrylnitril/Budadien-Copolymerisat ist.

3. Verfahren nach Anspruch 1, dadurch gekennzeichnet, daß das nicht-elastomere Polymerisat Polyvinylchlorid ist.

4. Verfahren nach Anspruch 1, dadurch gekennzeichnet, daß das Lösungsmittel Methylenchlorid ist.

**Revendications**

1. Procédé de production d'une poudre sèche d'élastomère s'écoulant librement, qui ne s'agglomère pas pendant l'entreposage, dans lequel une dispersion fluide de poudre d'élastomère et un latex de polymère non élastomérique sont mis en contact l'un avec l'autre et le latex est ensuite coagulé, en sorte qu'une partie au moins du polymère non élastomérique se dépose sur la poudre d'élastomère, et la portion solide est ensuite séparée et séchée, caractérisé en ce qu'on ajoute au latex, avant sa mise en contact avec la poudre d'élastomère en dispersion, 50 à 150 parties en poids de solvant pour 100 parties en poids de poudre non élastomérique, ledit solvant étant pratiquement non miscible à la phase fluide du latex et de la disperion de poudre d'élastomère et étant capable de faire gonfler le polymère non élastomérique et la poudre d'élastomère.

2. Procédé suivant la revendication 1, caractérisé en ce que l'élastomère en poudre est un copolymère acrylonitrile/butadiène.

3. Procédé suivant la revendication 1, caractérisé en ce que le polymère non élastomérique est le chlorure de polyvinyle.

4. Procédé suivant la revendication 1, caractérisé en ce que le solvant est le chlorure de méthylène.